(19) **Europäisches Patentamt**
**European Patent Office**
**Office européen des brevets**

(11) **EP 4 117 853 B1**

(12) **EUROPÄISCHE PATENTSCHRIFT**

(45) Veröffentlichungstag und Bekanntmachung des Hinweises auf die Patenterteilung:
**09.07.2025 Patentblatt 2025/28**

(21) Anmeldenummer: **21711220.0**

(22) Anmeldetag: **09.03.2021**

(51) Internationale Patentklassifikation (IPC):
**B23K 26/382** *(2014.01)* **B23K 26/0622** *(2014.01)*

(52) Gemeinsame Patentklassifikation (CPC):
**B23K 26/382; B23K 26/0622**

(86) Internationale Anmeldenummer:
**PCT/EP2021/055900**

(87) Internationale Veröffentlichungsnummer:
**WO 2021/180711 (16.09.2021 Gazette 2021/37)**

(54) **VERFAHREN UND VORRICHTUNG ZUM EINSTECHEN IN EIN WERKSTÜCK MITTELS EINES LASERSTRAHLS**

METHOD AND DEVICE FOR CUTTING INTO A WORKPIECE USING A LASER BEAM

PROCÉDÉ ET DISPOSITIF DE DÉCOUPE D'UNE PIÈCE À USINER À L'AIDE D'UN FAISCEAU LASER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.03.2020 DE 102020106734**

(43) Veröffentlichungstag der Anmeldung:
**18.01.2023 Patentblatt 2023/03**

(73) Patentinhaber: **Precitec GmbH & Co. KG 76571 Gaggenau-Bad Rotenfels (DE)**

(72) Erfinder:
• **WECKENMANN, Niklas 76437 Rastatt (DE)**
• **LIND, Jannik 70599 Stuttgart (DE)**

(74) Vertreter: **Ter Meer Steinmeister & Partner Patentanwälte mbB Nymphenburger Straße 4 80335 München (DE)**

(56) Entgegenhaltungen:
**WO-A1-2016/143521 US-A- 5 434 383 US-A1- 2002 185 474 US-B2- 8 816 246**

**Beschreibung**

Technisches Gebiet

Die vorliegende Offenbarung betrifft ein Verfahren und eine Vorrichtung zum Einstechen in ein Werkstück mittels eines Laserstrahls, und insbesondere ein Verfahren und eine Vorrichtung zum Steuern eines Einstechprozesses in der Lasermaterialbearbeitung.

Stand der Technik

In einer Vorrichtung zur Materialbearbeitung mittels Laser, z.B. in einem Laserbearbeitungskopf zum Laserschneiden, wird der von einer Laserlichtquelle oder einem Ende einer Laserleitfaser austretende Laserstrahl mit Hilfe einer Strahlführungs- und Fokussierungsoptik auf das zu bearbeitende Werkstück fokussiert oder gebündelt. Standardmäßig wird ein Laserbearbeitungskopf mit einer Kollimationsoptik und einer Fokussierungsoptik verwendet, wobei das Laserlicht über eine Lichtleitfaser, auch als Laserquelle bezeichnet, zugeführt wird.

Im Rahmen der Lasermaterialbearbeitung, insbesondere im Rahmen des Laserschneidens, kann ein Einstechprozess mittels des Laserstrahls in das Werkstück erfolgen. Der Einstechprozess ist dem eigentlichen Schneidprozess beim Laserschneiden vorgelagert. Bei diesem Prozess wird ein initiales Loch bzw. ein Durchstich im Werkstück erzeugt, das als Startpunkt für den Schneidprozess dient. Der Einstechprozess bzw. das Einstechen in das Werkstück kann daher auch als Durchstichprozess bzw. Durchstechen durch das Werkstück bezeichnet werden. Da beispielsweise ein darauffolgender Laserschneidprozess ohne den Durchstich nicht begonnen werden kann, spielt ein erfolgreicher Durchstich durch das Werkstück für das Laserschneiden eine wichtige Rolle. Die Dauer, die Qualität und die Stabilität des Einstechprozesses sind von einer Vielzahl von Prozessparametern abhängig. Dabei ist vor allem die Dauer des Einstechprozesses, d.h. die Zeitspanne zwischen der Aktivierung des Bearbeitungsstrahls und dem Durchstich durch das Material bzw. Werkstück (auch Durchstichzeit oder Einstechdauer genannt), ein kritischer Faktor für die Effizienz des Bearbeitungsprozesses. Die Dauer des Einstechprozesses ist von der zeitlichen Änderungsrate der Einstechtiefe abhängig. Die zeitliche Änderungsrate der Einstechtiefe wird im Folgenden als Einstechrate bezeichnet und spiegelt ebenfalls die Prozesseffizienz wider.

Der Stand der Technik beschreibt unterschiedliche Einstechverfahren, bei denen die Pulsfrequenz oder die mittlere Laserleistung innerhalb eines Einstechprozesses bis zum Durchstich erhöht wird, um die Einstechdauer bzw. die Durchstichzeit für eine gegebene Materialstärke zu minimieren. US 5 434 383 A beschreibt ein Einstechverfahren mit verkürzter Dauer, in dem die Pulsfrequenz und die relative Puls-Einschaltdauer stufenweise während des Einstechens erhöht werden. Ebenso beschreibt DE 11 2009 001 200 B4 ein Laserbearbeitungsverfahren zum Durchbohren und anschließenden Schneiden, wobei zum Durchbohren mit einer ersten Frequenz begonnen wird und mit einer zweiten Frequenz, die größer als die erste Frequenz ist, mit dem Durchbohren fortgefahren wird. In US 6 693 256 B2 hingegen wird die maximale Laserleistung während des Einstechens schrittweise erhöht.

Trends zu höheren Laserleistungen und größeren Blechstärken bzw. Werkstückdicken erschweren den Einstechvorgang und führen nicht nur zu längeren Durchstichzeiten, sondern auch häufiger zu einem Einstechstopp, bei dem die Einstechrate gegen Null geht und somit kein Durchstich möglich ist.

WO 2016/143521 A1 beschreibt ein Verfahren zum Herstellen einer Verbindungsstruktur, umfassend die Verwendung einer Laserstrahlquelle, die in der Lage ist, eine Laserimpulsgruppe wiederholt mit einer konstanten Periode oszillieren zu lassen, zum Bilden einer Vielzahl von Perforationen in einem Oberflächenabschnitt eines Metallelements, der eine Verbindungsfläche bildet, die mit einem Harzelement verbunden werden soll, und einen Verbindungsschritt zum Verbinden des Metallelements und des Harzelements miteinander durch Füllen der mehreren Perforationen mit dem Harzelement. Die Laserimpulsgruppe ist konfiguriert durch Kombinieren einer Vielzahl von Unterimpulsfolgen in Richtung der Zeitachse, deren Spitzenleistung der Unterimpulse sich voneinander unterscheidet.

US 2002/0185474 A1 beschreibt ein Verfahren zur Mikrobearbeitung geschichteter Substrate, insbesondere zum Bohren von Löchern in Leiterplatten, durch eine Vielzahl von Laserimpulsen.

US 8816246 B2 beschreibt ein Verfahren zur Ausbildung von Löchern in Materialien, insbesondere in Leiterplatten, durch eine Reihe von Laserimpulsfolgen.

Zusammenfassung der Erfindung

Eine Aufgabe der vorliegenden Erfindung ist, ein Verfahren und eine Vorrichtung zum Einstechen in ein Werkstück mittels eines Laserstrahls (auch Bearbeitungsstrahl genannt) anzugeben, durch das ein Einstechprozess, insbesondere für das Einstechen in dickeren Materialstärken bzw. in dicke Werkstücke, beispielsweise mit einer Dicke größer 10 mm oder sogar größer 20 mm, optimiert werden kann.

Eine weitere Aufgabe der vorliegenden Erfindung ist, ein Verfahren und eine Vorrichtung zum Einstechen in ein Werkstück mittels eines Laserstrahls anzugeben, durch das eine Einstechdauer minimiert bzw. eine Einstechrate maximiert werden kann.

Eine weitere Aufgabe der vorliegenden Erfindung ist, ein Verfahren und eine Vorrichtung zum Einstechen in ein Werkstück mittels eines Laserstrahls anzugeben, durch das ein sicherer Durchstich gewährleistet und ein Einstechstopp verhindert werden kann.

Diese Aufgaben werden durch die Merkmale der unabhängigen Ansprüche gelöst. Merkmale von bevorzugten Ausführungsformen sind in den Unteransprüchen angegeben.

Die vorliegende Erfindung beruht auf der Erkenntnis, dass ein Einstechprozess durch einen gezielten bzw. gesteuerten Energieeintrag des Laserstrahls in die Bearbeitungszone, und insbesondere durch das gezielte bzw. gesteuerte Verringern einer in die Bearbeitungszone eingestrahlten mittleren Pulsleistung des Laserstrahls während des Einstechprozesses, optimiert werden kann. Dabei kann der Energieeintrag von mindestens einem der folgenden Prozessparametern und Randbedingungen abhängig gesteuert werden: Materialstärke, Materialart, momentane bzw. aktuelle Einstechzeit, momentane bzw. aktuelle Einstechtiefe, Prozessgasart, Prozessgasdruck, Fokuslage, Abbildungsverhältnis des optischen Systems, Düsenart, Düsendurchmesser, Intensitätsverteilung des Laserstrahls, Fokusdurchmesser und Düsenabstand zur Werkstückoberseite. Basierend auf den genannten Parametern kann der Energieeintrag im Einstechloch bzw. in der Bearbeitungszone durch die Puls-Anzeit, Puls-Auszeit und/oder die Pulsspitzenleistung in Abhängigkeit der aktuellen Einstechzeit und/oder Einstechtiefe angepasst werden.

Gemäß einem Aspekt ist ein Verfahren zum Einstechen in ein Werkstück mittels eines Laserstrahls (auch Bearbeitungsstrahl genannt) angegeben. Das Verfahren umfasst: Einstrahlen eines gepulsten Laserstrahls auf ein Werkstück zum Ausbilden eines Durchstichs, wobei eine eingestrahlte mittlere Pulsleistung des gepulsten Laserstrahls während des Einstechens bzw. während einer Durchstichzeit, z.B. mindestens einmal, verringert wird. Die Durchstichzeit kann hier eine Dauer des Einstechens bzw. des Einstechvorgangs bezeichnen, d.h. eine Zeitspanne von einem Einschalten oder ersten Einstrahlen des Laserstrahls bis zu einem Durchstich durch das Werkstück. Mit anderen Worten umfasst ein Verfahren zum Einstechen in ein Werkstück mittels eines gepulsten Laserstrahls: einen ersten Einstechschritt, in dem ein gepulster Laserstrahl mit einer ersten mittleren Pulsleistung auf ein Werkstück gerichtet bzw. eingestrahlt wird; und einen zweiten Einstechschritt, in dem der gepulste Laserstrahl mit einer zweiten mittleren Pulsleistung auf das Werkstück gerichtet bzw. eingestrahlt wird, wobei die erste mittlere Pulsleistung größer ist als die zweite mittlere Pulsleistung. Vorzugsweise wird die eingestrahlte mittlere Pulsleistung während des Einstechens bzw. während der Durchstichzeit mindestens einmal verringert. Die eingestrahlte mittlere Pulsleistung kann diskret, d.h. stufenweise, oder kontinuierlich, oder auch in einer beliebigen Kombination aus diskreter und kontinuierlicher Änderung verringert werden. Die eingestrahlte mittlere Pulsleistung kann während des Einstechens bzw. während der Durchstichzeit mehrmals verringert werden. Somit können mehr als zwei Einstechschritte mit jeweils verschiedenen mittleren Pulsleistungen durchgeführt werden, die jeweils geringer sind als eine mittlere Pulsleistung in einem vorausgegangenen Einstichschritt. Die eingestrahlte mittlere Pulsleistung kann während eines Einstechschritts konstant sein. Die eingestrahlte mittlere Pulsleistung des gepulsten Laserstrahls kann während des Einstechens monoton oder streng monoton verringert werden. Die eingestrahlte mittlere Pulsleistung des gepulsten Laserstrahls zu Beginn des Einstechens bzw. der Durchstichzeit kann größer sein als die eingestrahlte mittlere Pulsleistung beim Durchstich, d.h. am Ende des Eistechens bzw. der Durchstichzeit. Vorzugsweise weist eine Ausgleichs- bzw. Regressionsgerade der eingestrahlten mittleren Pulsleistung während der Durchstichzeit, d.h. von einem Beginn des Einstechens bis zum Durchstich, eine negative Steigung auf. Die eingestrahlte mittlere Pulsleistung des gepulsten Laserstrahls kann durch mindestens eine der folgenden Einstellungen bzw. Änderungen verringert werden: Verlängern einer Puls-Auszeit, Verringern einer Pulsspitzenleistung, Verkürzen einer Puls-Anzeit, Verringern einer Pulsfrequenz und Verringern einer relativen Puls-Einschaltdauer. Insbesondere kann die Verringerung der eingestrahlten mittleren Pulsleistung durch Variieren der Puls-Anzeit und der Puls-Auszeit erfolgen: Beispielsweise können die Puls-Auszeit und die Puls-Anzeit verlängert werden, wenn die Puls-Anzeit weniger als die Puls-Auszeit verlängert wird. In einem weiteren Beispiel können die Puls-Auszeit und die Puls-Anzeit verkürzt werden, wenn die Puls-Anzeit mehr als die Puls-Auszeit verkürzt wird. In einem weiteren Beispiel kann die Puls-Auszeit konstant bleiben, wenn die Puls-Anzeit verkürzt wird. Wenn die eingestrahlte mittlere Pulsleistung durch Verlängern der Puls-Auszeit verringert wird, kann die Pulsspitzenleistung und/oder eine Puls-Anzeit und/oder eine Pulsenergie während des Einstechens bzw. während der Durchstichzeit konstant gehalten werden. In einer Ausführungsform kann das Verfahren zumindest zwei Einstechschritte aufweisen, wobei die erste mittlere Pulsleistung im ersten Einstechschritt größer oder gleich einer mittleren Grenz-Pulsleistung ist und die zweite mittlere Pulsleistung im zweiten Einstechschritt kleiner ist als die erste mittlere Pulsleistung und/oder als die mittlere Grenz-Pulsleistung. Optional kann das Verfahren einen dritten Einstechschritt umfassen, in dem eine dritte mittlere Pulsleistung kleiner ist als die zweite mittlere Pulsleistung. Die mittlere Grenz-Pulsleistung kann eine mittlere Pulsleistung bezeichnen, ab der die Einstechrate gegen Null geht bzw. ab der ein Einstechstopp auftritt bzw. ab der eine Sättigung beim Einstechen auftritt. Die mittleren Grenz-Pulsleistung kann abhängig von einem Material und/oder einer Dicke des Werkstücks vorgegeben sein.

Gemäß einem weiteren Aspekt ist ein Verfahren zum Einstechen in ein Werkstück mittels eines Laserstrahls (auch Bearbeitungsstrahl genannt) angeben. Das Verfahren umfasst: Einstrahlen eines gepulsten Laserstrahls auf ein Werkstück zum Ausbilden eines Durchstichs, wobei eine Puls-Auszeit des gepulsten Laserstrahls während des Einstechens bzw. während einer Durchstichzeit, z.B. mindestens einmal, verlängert wird. Die Durchstichzeit kann hier eine Dauer des Einstechens bzw. des Einstechvorgangs bezeichnen, d.h. eine Zeitspanne von einem ersten Einschalten des Laserstrahls bis zu einem Durchstich durch das Werkstück. Mit anderen Worten umfasst ein Verfahren zum Einstechen in ein Werkstück mittels eines gepulsten Laserstrahls: einen ersten Einstechschritt, in dem ein gepulster Laserstrahl mit einer ersten Puls-Auszeit auf ein Werkstück gerichtet bzw. eingestrahlt wird; und einen zweiten Einstechschritt, in dem der gepulste Laserstrahl mit einer zweiten Puls-Auszeit auf das Werkstück gerichtet bzw. eingestrahlt wird, wobei die erste Puls-Auszeit kleiner ist als die zweite Puls-Auszeit. Vorzugsweise wird die Puls-Auszeit während des Einstechens bzw. während der Durchstichzeit mindestens einmal verlängert. Die Puls-Auszeit des gepulsten Laserstrahls kann diskret, d.h. stufenweise, oder kontinuierlich, oder auch in einer beliebigen Kombination aus diskreter und kontinuierlicher Änderung verlängert werden. Die Puls-Auszeit kann während des Einstechens bzw. während der Durchstichzeit mehrmals verringert werden. Somit können mehr als zwei Einstechschritte mit jeweils verschiedenen Puls-Auszeiten durchgeführt werden, die jeweils länger sind als eine Puls-Auszeit in einem vorausgegangenen Einstechschritt. Die Puls-Auszeit kann während eines Einstechschritts konstant sein. Die Puls-Auszeit kann während des Einstechens monoton oder streng monoton vergrößert werden. Die Puls-Auszeit des gepulsten Laserstrahls zu Beginn des Einstechens bzw. der Durchstichzeit kann kleiner sein als die Puls-Auszeit beim Durchstich, d.h. am Ende des Einstechens bzw. der Durchstichzeit. Vorzugsweise weist eine Ausgleichs- bzw. Regressionsgerade der Puls-Auszeit während der Durchstichzeit, d.h. von einem Beginn des Einstechens bis zum Durchstich, eine positive Steigung auf. Die Puls-Auszeit des gepulsten Laserstrahls kann durch Verringern einer Pulsfrequenz und/oder Verringern einer relativen Puls-Einschaltdauer verlängert werden. Eine Pulsspitzenleistung und/oder eine Puls-Anzeit und/oder eine Pulsenergie kann während des Einstechens bzw. während der Durchstichzeit konstant gehalten werden. In einer Ausführungsform kann das Verfahren zumindest zwei Einstechschritte aufweisen, wobei die erste Puls-Auszeit im ersten Einstechschritt kleiner oder gleich einer Grenz-Puls-Auszeit ist und die zweite Puls-Auszeit im zweiten Einstechschritt größer ist als die erste Puls-Auszeit und/oder als die Grenz-Puls-Auszeit. Optional kann das Verfahren einen dritten Einstechschritt umfassen, in dem eine dritte Puls-Auszeit größer ist als die zweite Puls-Auszeit. Die Grenz-Puls-Auszeit kann eine Puls-Auszeit bezeichnen, unter der die Einstechrate gegen Null geht bzw. ein Einstechstopp auftritt bzw. eine Sättigung beim Einstechen auftritt. Die Grenz-Puls-Auszeit kann abhängig von einem Material und/oder einer Dicke des Werkstücks vorgegeben sein.

Gemäß einem anderen weiteren Aspekt ist ein Verfahren zum Einstechen in ein Werkstück mittels eines Laserstrahls (auch Bearbeitungsstrahl genannt) angeben. Das Verfahren umfasst: Einstrahlen eines gepulsten Laserstrahls auf ein Werkstück zum Ausbilden eines Durchstichs, wobei eine Pulsfrequenz des gepulsten Laserstrahls während des Einstechens bzw. während einer Durchstichzeit, z.B. mindestens einmal, verringert wird. Die Durchstichzeit kann hier eine Dauer des Einstechens bzw. des Einstechvorgangs bezeichnen, d.h. eine Zeitspanne von einem ersten Einschalten des Laserstrahls bis zu einem Durchstich durch das Werkstück. Mit anderen Worten umfasst ein Verfahren zum Einstechen in ein Werkstück mittels eines gepulsten Laserstrahls: einen ersten Einstechschritt, in dem ein gepulster Laserstrahl mit einer ersten Pulsfrequenz auf ein Werkstück gerichtet bzw. eingestrahlt wird; und einen zweiten Einstechschritt, in dem der gepulste Laserstrahl mit einer zweiten Pulsfrequenz auf das Werkstück gerichtet bzw. eingestrahlt wird, wobei die erste Pulsfrequenz größer ist als die zweite Pulsfrequenz. Vorzugsweise wird die Pulsfrequenz während des Einstechens bzw. während der Durchstichzeit mindestens einmal verringert. Die Pulsfrequenz des gepulsten Laserstrahls kann diskret, d.h. stufenweise, oder kontinuierlich, oder auch in einer beliebigen Kombination aus diskreter und kontinuierlicher Änderung verlängert werden. Die Pulsfrequenz kann während des Einstechens bzw. während der Durchstichzeit mehrmals verringert werden. Somit können mehr als zwei Einstechschritte mit jeweils verschiedenen Pulsfrequenzen durchgeführt werden, die jeweils kleiner sind als eine Pulsfrequenz in einem vorausgegangenen Einstechschritt. Die Pulsfrequenz kann während eines Einstechschritts konstant sein. Die Pulsfrequenz kann während des Einstechens monoton oder streng monoton verringert werden. Die Pulsfrequenz des gepulsten Laserstrahls zu Beginn des Einstechens bzw. der Durchstichzeit kann größer sein als die Pulsfrequenz beim Durchstich, d.h. am Ende des Eistechens bzw. der Durchstichzeit. Vorzugsweise weist eine Ausgleichs- bzw. Regressionsgerade der Pulsfrequenz während der Durchstichzeit, d.h. von einem Beginn des Einstechens bis zum Durchstich, eine negative Steigung auf. Die Pulsfrequenz des gepulsten Laserstrahls kann durch Verlängern einer Puls-Auszeit verringert werden. Eine Pulsspitzenleistung und/oder eine Puls-Anzeit und/oder eine Pulsenergie kann während des Einstechens bzw. während der Durchstichzeit konstant gehalten werden. In einer Ausführungsform kann das Verfahren zumindest zwei Einstechschritte aufweisen, wobei die erste Pulsfrequenz im ersten Einstechschritt größer oder gleich einer Grenz-Pulsfrequenz ist und die zweite Pulsfrequenz im zweiten Einstechschritt kleiner ist als die erste Pulsfrequenz und/oder als die Grenz-Pulsfrequenz. Optional kann das Verfahren einen dritten Einstechschritt umfassen, in dem eine dritte Pulsfrequenz kleiner ist als die zweite Pulsfrequenz. Die Grenz-Pulsfrequenz kann eine Pulsfrequenz bezeichnen, ab der die Einstechrate gegen Null geht bzw. ab der ein Einstechstopp auftritt bzw. ab der eine Sättigung beim Einstechen auftritt. Die Grenz-Pulsfrequenz kann abhängig von einem Material und/oder einer Dicke des Werkstücks vorgegeben sein.

Jeder dieser Aspekte kann eines oder mehrere der folgenden Merkmale aufweisen:
Pulsparameter können die eingestrahlte mittlere Pulsleistung, die Puls-Auszeit, die Puls-Anzeit, die Pulsfrequenz, die Pulsperiode, die relative Puls-Einschaltdauer und/oder die Pulsspitzenleistung umfassen. Mindestens einer der Pulsparameter, ausgewählt aus der Gruppe umfassend die eingestrahlte mittlere Pulsleistung, die Puls-Auszeit, die Puls-Anzeit, die Pulsfrequenz, die relative Puls-Einschaltdauer und die Pulsspitzenleistung, kann abhängig von einem Material und/oder einer Dicke des Werkstücks (auch Materialstärke genannt) und/oder von einer momentanen Einstechzeit und/oder von einer momentanen Einstechtiefe eingestellt werden. Insbesondere kann eine erste Pulsfrequenz, eine erste mittlere Pulsleistung und/oder eine erste Puls-Auszeit abhängig vom Material und/oder von der Dicke des Werkstücks gewählt sein. Eine Pulsfrequenz, eine mittlere Pulsleistung und/oder eine Puls-Auszeit, insbesondere in einem dem ersten Einstechschritt folgenden Einstechschritt, kann basierend auf einer momentanen Einstechzeit und/oder von einer momentanen Einstechtiefe eingestellt werden. Insbesondere kann mindestens einer der Pulsparameter, ausgewählt aus der Gruppe umfassend die eingestrahlte mittlere Pulsleistung, die Puls-Auszeit, die Puls-Anzeit, die Pulsfrequenz, die relative Puls-Einschaltdauer und die Pulsspitzenleistung, basierend auf mindestens einem von der Dicke des Werkstücks, dem Material des Werkstücks, einer Prozessgasart, einem Prozessgasdruck, einer Fokuslage, einem Abbildungsverhältnis des optischen Systems bzw. des Laserbearbeitungskopfs, einem Fokusdurchmesser und einem Düsenabstand zur Werkstückoberseite, und in Abhängigkeit der aktuellen Einstechzeit und/oder Einstechtiefe geändert werden.

Vorzugsweise ist die Puls-Anzeit während des Einstechens bzw. während der Durchstichzeit konstant. Die Puls-Anzeit kann abhängig von einem Material oder einer Dicke des Werkstücks eingestellt sein.

Vorzugsweise ist die Pulsspitzenleistung während des Einstechens bzw. während der Durchstichzeit konstant. Die Pulsspitzenleistung kann abhängig von einem Material oder einer Dicke des Werkstücks eingestellt sein.

Vorzugsweise ist eine Puls-Energie während des Einstechens bzw. während der Durchstichzeit konstant. Mit anderen Worten kann das Produkt aus Pulsspitzenleistung und Puls-Anzeit konstant eingestellt werden. Die Puls-Energie kann abhängig von einem Material oder einer Dicke des Werkstücks eingestellt sein. Optional kann ein Mindestwert für die Puls-Energie in Abhängigkeit von einem Material oder einer Dicke des Werkstücks eingestellt sein.

Vorzugsweise ist eine Dauer der einzelnen Einstechschritte unterschiedlich lang. Beispielsweise kann eine Dauer eines ersten Einstechschritts länger sein als die eines nachfolgenden, z.B. zweiten oder dritten, Einstechschritts. Bei einer diskreten bzw. stufenweisen Änderung der mittleren Puls-Leistung, der Puls-Auszeit und/oder der Pulsfrequenz kann zudem eine erste Änderung, d.h. eine Änderung vom ersten zum zweiten Einstechschritt, größer sein als eine zweite Änderung, d.h. eine Änderung vom zweiten Einstechschritt zu einem dritten Einstechschritt.

In einer Ausführungsform kann eine zu Beginn des Einstechens und/oder im ersten Einstechschritt verwendete Pulsfrequenz größer oder gleich einer Grenz-Pulsfrequenz sein. Die Grenz-Pulsfrequenz kann in Abhängigkeit des Materials und/oder der Dicke des Werkstücks vorgegeben sein.

In einer Ausführungsform kann eine zu Beginn des Einstechens und/oder im ersten Einstechschritt verwendete Puls-Auszeit größer oder gleich einer Grenz-Puls-Auszeit sein. Die Grenz-Puls-Auszeit kann in Abhängigkeit des Materials und/oder der Dicke des Werkstücks vorgegeben sein.

Vorzugsweise liegt die Puls-Anzeit, z.B. während der Durchstichdauer, in einem Bereich zwischen 0,01 ms und 100 ms ($0{,}01\,\text{ms} \leq t_{an} \leq 100\,\text{ms}$), insbesondere zwischen 0,1 ms und 10 ms ($0{,}1\,\text{ms} \leq t_{an} \leq 10\,\text{ms}$). Vorzugsweise liegt die Puls-Auszeit, z.B. während der Durchstichdauer, in einem Bereich zwischen 0,01 ms und 100 ms ($0{,}01\,\text{ms} \leq t_{aus} \leq 100\,\text{ms}$), insbesondere zwischen 0,1 ms und 10 ms ($0{,}1\,\text{ms} \leq t_{aus} \leq 10\,\text{ms}$).

Vorzugsweise liegt eine Puls-Anzeit oder eine Pulsperiode des gepulsten Laserstrahls, z.B. während der Durchstichdauer, in einem Bereich von Mikrosekunden oder Millisekunden. Das Einstechen kann in diesem Fall vornehmlich durch Schmelzen des Werkstücks erfolgen. Es kann ein Faser-, Scheiben oder Direktdiodenlaser verwendet werden. Eine Wellenlänge des gepulsten Laserstrahls liegt vorzugsweise im Bereich von 800nm bis 1300nm. Vorzugsweise wird die Pulsfrequenz abhängig von der Dicke des Werkstücks eingestellt. Bei einer Dicke des Werkstücks von 10 mm bis 15 mm kann die Pulsfrequenz, z.B. während der Durchstichdauer, in einem Bereich zwischen 400 Hz und 3000 Hz ($400\,\text{Hz} \leq f \leq 3000\,\text{Hz}$), insbesondere zwischen 600 Hz und 1500 Hz ($600\,\text{Hz} \leq f \leq 1500\,\text{Hz}$) liegen. Hier kann die Pulsfrequenz während des Einstechens mindestens einmal geändert werden. Bei einer Dicke des Werkstücks von größer 15 mm bis 20 mm kann die Pulsfrequenz, z.B. während der Durchstichdauer, in einem Bereich zwischen 300 Hz und 2000 Hz ($300\,\text{Hz} \leq f \leq 2000\,\text{Hz}$), insbesondere zwischen 400 Hz und 900 Hz ($400\,\text{Hz} \leq f \leq 900\,\text{Hz}$) liegen. Hier kann die Pulsfrequenz während des Einstechens mindestens einmal geändert werden. Bei einer Dicke des Werkstücks von größer 20 mm bis 25 mm kann die Pulsfrequenz, z.B. während der Durchstichdauer, in einem Bereich zwischen 300 Hz und 1500 Hz ($300\,\text{Hz} \leq f \leq 1500\,\text{Hz}$), insbesondere zwischen 400 Hz und 800 Hz ($400\,\text{Hz} \leq f \leq 800\,\text{Hz}$) liegen. Hier kann die Pulsfrequenz während des Einstechens mindestens zweimal geändert werden. Bei einer Dicke des Werkstücks von größer 25 mm kann die Pulsfrequenz, z.B. während der Durchstichdauer, in einem Bereich zwischen 200 Hz und 1000 Hz ($200\,\text{Hz} < f \leq 1000\,\text{Hz}$), insbesondere zwischen 400 Hz und 700 Hz ($400\,\text{Hz} \leq f \leq 700\,\text{Hz}$) liegen. Hier kann die Pulsfrequenz während des Einstechens mindestens zweimal geändert werden.

Das Verfahren wird für das Einstechen in Werkstücke mit einer Dicke von mindestens 10 mm, insbesondere mit einer Dicke von mindestens 20 mm, beispielsweise mit einer Dicke von 30 mm, eingesetzt werden. Eine Pulsspitzenleistung des gepulsten Laserstrahls während des Einstechens beträgt vorzugsweise mindestens 4 kW, und kann insbesondere größer oder gleich 6 kW sein.

Das Material ist ein metallisches Werkstück. Das Werkstück kann aus Metall bestehen oder Metall umfassen. Das Werkstück kann ein Blech umfassen oder sein. Weiterhin kann ein Material des Werkstücks bzw. Blechs mindestens eines von einer Baustahl-Legierung, einer Edelstahl-Legierung, einer Aluminium-Legierung, einer KupferLegierung, einer Messing-Legierung, Baustahl, Edelstahl, Aluminium, Kupfer und Messing umfassen oder sein.

Vorzugsweise wird während des Einstechens ein inertes Prozessgas, z.B. Stickstoff, Argon, o.ä., auf das Werkstück gerichtet. Das Prozessgas kann koaxial zum Laserstrahl auf das Werkstück treffen.

Das Verfahren zum Einstechen kann zur Vorbereitung eines Verfahrens zum Laserschneiden dienen. Mit anderen Worten kann das Verfahren ferner umfassen: Schneiden des Werkstücks mittels des Lasers ausgehend vom Durchstich. Demzufolge ist gemäß einer Ausführungsform der vorliegenden Erfindung auch ein Verfahren zum Laserschneiden angegeben, umfassend das Verfahren zum Einstechen gemäß einer der in dieser Offenbarung beschriebenen Ausführungsformen; und Schneiden mittels des Laserstrahls ausgehend vom Durchstich. Während des (gesamten) Verfahrens zum Einstechen bzw. während des (gesamten) Einstechens kann der Laserstrahl (auch Bearbeitungsstrahl genannt) gepulst sein. Während des Laserschneidens wird der Laserstrahl vorzugsweise kontinuierlich eingesetzt. Selbstverständlich kann zum Laserschneiden und zum Einstechen derselbe Laserstrahl, möglicherweise mit unterschiedlichen Parametern, eingesetzt werden. Mit anderen Worten kann der Laserstrahl zum Einstechen und der Laserstrahl zum Laserschneiden von derselben Laserquelle stammen.

Gemäß einem weiteren Aspekt ist eine Vorrichtung zur Lasermaterialbearbeitung eines Werkstücks angegeben. Die Vorrichtung umfasst eine Laserquelle zum Erzeugen eines Laserstrahls; einen Laserbearbeitungskopf zum Einstrahlen des Laserstrahls auf ein Werkstück; und eine Steuervorrichtung konfiguriert zum Steuern der Vorrichtung, um ein Verfahren zum Einstechen und zum Laserschneiden mit den folgenden Schritten durchzuführen: Einstrahlen des gepulsten Laserstrahls auf ein metallisches Werkstück zum Ausbilden eines Durchstichs, wobei eine eingestrahlte mittlere Pulsleistung des gepulsten Laserstrahls während des Einstechens verringert wird, und Schneiden mittels des Laserstrahls ausgehend vom ausgebildeten Durchstich.

Im Rahmen dieser Offenbarung kann die Puls-Auszeit als die Zeit einer Pulsperiode definiert sein, in der die eingestrahlte Leistung unterhalb eines vorgegebenen Schwellwerts, beispielsweise unterhalb von 30%, oder 20%, oder 10% einer maximalen Laserleistung bzw. einer Pulsspitzenleistung liegt. Mit anderen Worten kann im Rahmen dieser Offenbarung die Puls-Anzeit als die Zeit einer Pulsperiode definiert sein, in der die eingestrahlte Leistung oberhalb eines vorgegebenen Schwellwerts, beispielsweise oberhalb von 30%, oder 20%, oder 10% einer maximalen Laserleistung bzw. einer Pulsspitzenleistung liegt.

Ferner kann im Rahmen dieser Offenbarung ein Pulsparameter, beispielsweise die eingestrahlte mittlere Pulsleistung, eine Pulsspitzenleistung, eine Pulsfrequenz, eine Pulsperiode, eine Puls-Auszeit, eine Puls-Anzeit, eine relative Puls-Einschaltdauer und/oder eine Pulsenergie, in einem Bereich von $\pm 0,2$ oder $\pm 0,1$ fachen des Mittelwert dieses Pulsparameters liegen, anstatt konstant zu sein.

Kurze Beschreibung der Zeichnungen

Ausführungsbeispiele der Offenbarung sind in den Figuren dargestellt und werden im Folgenden näher beschrieben. Es zeigen:

Figur 1 einen schematischen Aufbau einer Vorrichtung zur Lasermaterialbearbeitung gemäß Ausführungsformen der vorliegenden Offenbarung,

Figur 2 eine schematische Darstellung der Pulsparameter,

Figur 3A eine grafische Darstellung von Messwerten der Durchstichzeit in Abhängigkeit der Pulsfrequenz für unterschiedliche Werkstückdicken,

Figur 3B Schliffbilder eines Einstichvorgangs in ein 30 mm dickes Edelstahlblech mit verschiedenen Pulsfrequenzen,

Figur 4A eine schematische Darstellung eines Einstichvorgangs mit einer Grenz-Pulsfrequenz zu einem ersten Zeitpunkt,

Figur 4B eine schematische Darstellung des Einstichvorgangs von Fig. 4A zu einem zweiten Zeitpunkt nach Eintritt eines Einstechstopps,

Figur 5 eine schematische Darstellung der Pulsfrequenz in Abhängigkeit der Einstichzeit während eines Verfahrens zum Einstechen mit schrittweisem Absenken der Pulsfrequenz gemäß Ausführungsformen der vorliegenden Offenbarung,

Figur 6 eine schematische Darstellung der eingestrahlten Laserleistung bzw. der eingestrahlten Pulsfolge in Abhängigkeit der Einstichzeit während eines Verfahrens zum Einstechen mit schrittweisem Absenken der Pulsfrequenz bei konstanter Puls-Anzeit gemäß Ausführungsformen der vorliegenden Offenbarung,

Figuren 7A bis D schematische Darstellungen der Abhängigkeit zwischen Pulsfrequenz und Einstichtiefe während des Verfahrens zum Einstechen von Fig. 6,

Figur 8 eine schematische Darstellung der Pulsfrequenz in Abhängigkeit der Einstichzeit während eines Verfahrens zum Einstechen mit stufenweisem Absenken von Pulsfrequenzbändern gemäß Ausführungsformen der vorliegenden Offenbarung, und

Figur 9 eine schematische Darstellung der Pulsfrequenz in Abhängigkeit der Einstichzeit während eines Verfahrens zum Einstechen mit Absenken einer Ausgleichsgeraden der Pulsfrequenz gemäß Ausführungsformen der vorliegenden Offenbarung.

Detaillierte Beschreibung der Erfindung

Im Folgenden werden, sofern nicht anders vermerkt, für gleiche und gleichwirkende Elemente gleiche Bezugszeichen verwendet.

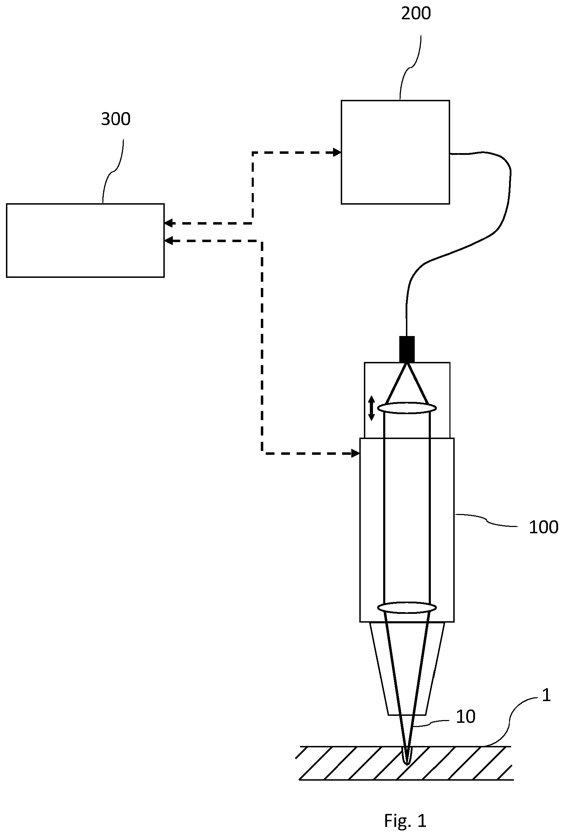

Figur 1 zeigt eine schematische Darstellung einer Vorrichtung zur Lasermaterialbearbeitung gemäß Ausführungsformen der vorliegenden Offenbarung. Die Vorrichtung zur Lasermaterialbearbeitung kann einen Laserbearbeitungskopf 100, insbesondere einen Laserschneidkopf, zum Einstrahlen eines Laserstrahls 10 auf ein Werkstück 1, eine Laserquelle 200 zum Erzeugen des Laserstrahls 10 und eine Steuervorrichtung 300 umfassen. Die Steuervorrichtung 300 ist eingerichtet bzw. konfiguriert zum Steuern der Vorrichtung, insbesondere zum Steuern der Vorrichtung entsprechend einem Verfahren gemäß einer der in dieser Offenbarung beschriebenen Ausführungsformen.

Die Laserquelle 200 emittiert einen Laserstrahl 10, auch Bearbeitungsstrahl genannt, welcher durch eine Bearbeitungsoptik auf das Werkstück 1 geführt und fokussiert wird. Die Bearbeitungsoptik und/oder die Laserquelle 200 sind mit der Steuervorrichtung 300 verbunden. Die Steuervorrichtung 300 kann zusätzlich zur Steuerungsfunktion auch eine Auswerte- und/oder Berechnungsfunktion aufweisen. Die Bearbeitungsoptik kann zur Strahlführung und Strahlformung transmittierende und/oder reflektierende optische Elemente aufweisen. Ferner kann die Vorrichtung zur Lasermaterialbearbeitung eine Gaszufuhr zum Zuführen eines Prozessgases in eine Bearbeitungszone auf dem Werkstück 1 aufweisen.

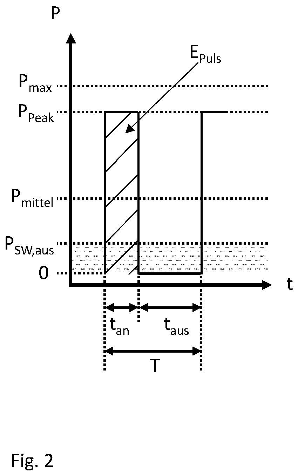

Während des Einstechens wird der Laserstrahl 10 gepulst auf das Werkstück 1 gerichtet. Eine schematische Übersicht über die Pulsparameter ist in Fig. 2 dargestellt. Die Pulsperiode oder Pulsperiode T ergibt sich aus der Puls-Anzeit $t_{an}$ und der Puls-Auszeit $t_{aus}$:

$$T = t_{an} + t_{aus}.$$

Die Puls-Anzeit $t_{an}$ bezeichnet die Zeitspanne des Laserpulses, während der Energie auf das Werkstück 1 eingestrahlt wird. Entsprechend bezeichnet die Puls-Auszeit $t_{aus}$ die Zeitspanne, während der keine bzw. quasi keine Energie auf das Werkstück 1 eingestrahlt wird. Der Kehrwert der Pulsperiode T wird als Pulsfrequenz bezeichnet: $f = 1/T$. Somit ist die Pulsfrequenz sowohl von der Puls-Anzeit als auch von der Puls-Auszeit abhängig. Das Verhältnis zwischen Puls-Anzeit und Pulsperiode wird als relative Puls-Einschaltdauer R (Duty cycle) bezeichnet: $R = t_{an}/T$. Die Pulsspitzen-leistung $P_{peak}$ kann der von der Laserquelle 200 maximal zur Verfügung gestellten Laserleistung, im folgenden maximale Laserleistung, $P_{max}$ entsprechen. Die eingestrahlte Energie während eines Pulses, d.h. die sogenannte Pulsenergie berechnet sich aus dem Produkt aus Pulsspitzenleistung und Puls-Anzeit:

$$E_{Puls} = P_{peak} * t_{an}.$$

Entsprechend berechnet sich die eingestrahlte mittlere Pulsleistung aus dem Produkt aus relativer Einschaltdauer und Pulsspitzenleistung bzw. aus dem Produkt aus Pulsspitzenleistung und Puls-Anzeit und Pulsfrequenz:

$$P_{mittel} = P_{peak} * R = P_{peak} * t_{an} * f = P_{peak} * (1 - t_{aus}/(t_{an} + t_{aus})).$$

Im Sinne der vorliegenden Offenbarung kann nicht nur die Zeit der Pulsperiode, während der keine Energie eingestrahlt wird, als Puls-Auszeit betrachtet werden, sondern auch eine Zeit der Pulsperiode, während der die eingestrahlte Energie bzw. die eingestrahlte Leistung unterhalb eines Schwellwerts bleibt. In Fig. 2 ist ein solcher Schwellwert für die eingestrahlte Leistung als $P_{SW,aus}$ eingezeichnet. Das heißt, sobald die aktuelle auf das Werkstück eingestrahlte Leistung unterhalb dieses Schwellwertes $P_{SW,aus}$ liegt, liegt eine Puls-Auszeit vor. Der Schwellwert kann beispielsweise 30% der maximalen Laserleistung ($P_{SW,aus} = 0,3 * P_{max}$) oder 20% der maximalen Laserleistung oder sogar 10% * der maximalen Laserleistung betragen.

Gemäß der vorliegenden Offenbarung ist die Steuervorrichtung 300 eingerichtet, einen Energieeintrag in die Bearbeitungszone bzw. auf das Werkstück 1 in Abhängigkeit von einem oder mehreren der folgenden Prozessparametern und Randbedingungen zu steuern: Materialstärke bzw. Werkstückdicke, Material des Werkstücks, aktuelle Einstechzeit, aktuelle Einstechtiefe, Prozessgasart, Prozessgasdruck, Fokuslage, Abbildungsverhältnis des optischen Systems, Fokusdurchmesser und Düsenabstand zur Werkstückoberseite. Basierend auf mindestens einem der genannten Parameter kann der Energieeintrag durch die Puls-Anzeit ($t_{an}$), Puls-Auszeit ($t_{aus}$) und/oder die Pulsspitzen-leistung ($P_{peak}$) in Abhängigkeit von der aktuellen Einstechzeit bzw. Einstechtiefe gesteuert werden. Durch Kenntnis der Wirkzusammenhänge in der Prozesszone ist es möglich, die Prozessparameter gezielt anzupassen und somit die Prozesseffizienz zu steigern.

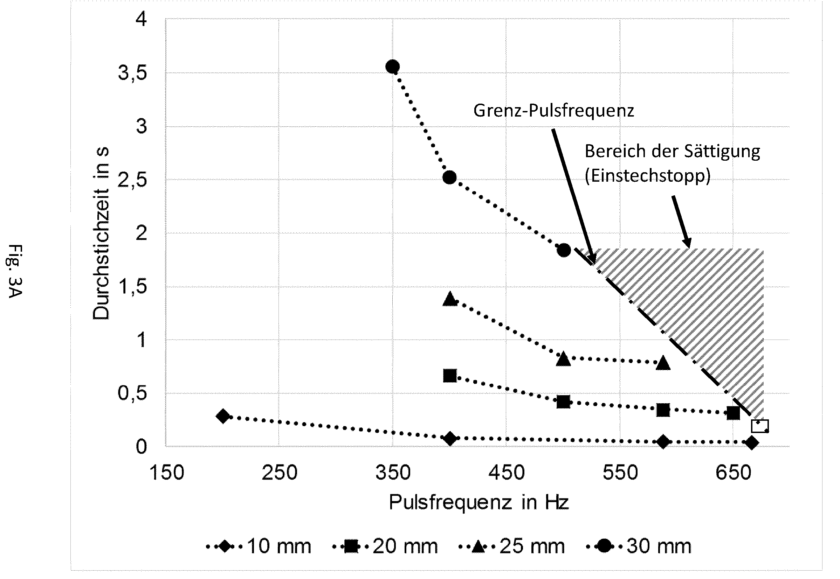

In der Regel nimmt die Einstechrate (Änderung der Einstechtiefe pro Zeit) mit zunehmender Einstechtiefe ab, und die Durchstichzeit, d.h. die Zeitspanne von einem ersten Einstrahlen des Laserstrahls auf das Werkstück bis zum Durchstich, nimmt mit zunehmender Einstechtiefe s zu. In Fig. 3A ist die Durchstichzeit (in Sekunden) in Abhängigkeit einer gewählten Pulsfrequenz (in Hertz) für unterschiedliche Materialstärken bzw. Werkstückdicken (in Millimetern) dargestellt. Dabei ist die Pulsfrequenz während des gesamten Einstechprozesses konstant. Mit abnehmender Pulsfrequenz nimmt die Durchstichzeit überproportional zu. Die Ursache ist unter anderem auf die zunehmende Wiedererstarrung der Schmelze an der Wand des Einstechlochs zurückzuführen. Als Folge nimmt die Einstechrate ab und die Prozesseffizienz sinkt. Weiterhin ist ein Bereich der Sättigung, in dem ein Tiefenabtrag gestoppt ist, schraffiert eingezeichnet, sowie eine sogenannte Grenz-Pulsfrequenz in Abhängigkeit der Materialstärke. Die Grenz-Pulsfrequenz beschreibt eine Pulsfrequenz-Schwelle, ab der ein sicherer Durchstich bei gegebenen Prozessparametern und Randbedingungen nicht mehr möglich ist. Die Grenz-Pulsfrequenz verschiebt sich mit zunehmender Materialstärke hin zu kleineren Pulsfrequenzen.

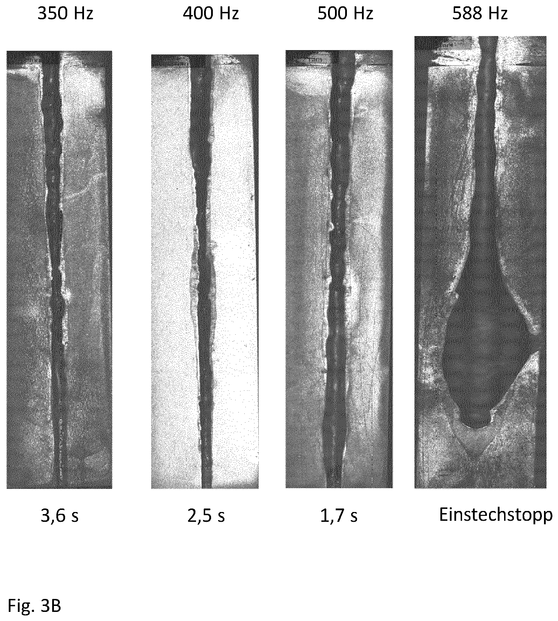

In Fig. 3B sind Schliffbilder von Durchstichen in ein 30 mm dickes Werkstück aus Edelstahl mit einer Pulsspitzenleistung von 6 kW gezeigt (vgl. oberste Kurve in Fig. 3A). Bei einer Pulsfrequenz von 350 Hz (konstant) beträgt die Durchstichzeit 3,6 s (erstes Bild von links in Fig. 3B), bei einer Pulsfrequenz von 400 Hz (konstant) beträgt die Durchstichzeit 2,5 s (zweites Bild von links in Fig. 3B), und bei einer Pulsfrequenz von 500 Hz (konstant) beträgt die Durchstichzeit 1,7 s (drittes Bild von links in Fig. 3B). Bei einer Pulsfrequenz von 588 Hz (konstant) kommt es zum Einstechstopp (kein Durchstich, rechts in Fig. 3B).

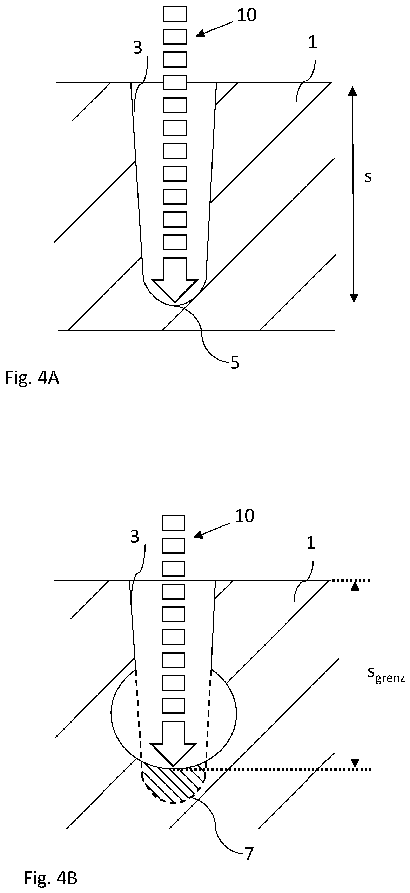

In Fig. 4A und 4B ist schematisch das Einstechloch 3 beim Einstechen mit einer Grenz-Pulsfrequenz für zwei unterschiedliche Zeitpunkte dargestellt. Ab einer bestimmten Einstechtiefe s ist die Zeit zwischen den einzelnen Pulsen (Puls-Auszeit) zu kurz bzw. die Pulsfrequenz ist zu groß, um das aufgeschmolzene Material in ausreichender Menge aus dem Einstechloch 3 auszutreiben, sodass es zum Einstechstopp kommt. Eine weitere Ursache für den Einstechstopp liegt in der abnehmenden eingekoppelten Energie des Laserstrahls 10 am Einstichgrund 5 mit zunehmender Einstechtiefe s und dem zunehmend größeren Weg, den das aufgeschmolzene Material bis zum Austritt aus dem Einstechloch 3 zurücklegen muss (vgl. Fig. 4A). Die eingestrahlte Energie erwärmt mit steigender Einstichtiefe zunehmend auch die Seiten des Einstechlochs 3, sodass es zu einer höhlenartigen Aufschmelzung kommen kann. Bei dicken Materialstärken, z.B. größer als 20 mm, kann daher eine Sättigung des Einstechprozesses eintreten (vgl. Fig. 4B), bei der die Einstechrate gegen 0 geht (Einstechstopp), wenn die Pulsfrequenz beliebig groß bzw. größer als eine jeweilige Grenz-Pulsfrequenz ist. Die Restschmelze im Einstechloch 3 und die darauffolgenden Pulse führen zu einer immer größeren Aufheizung der Bearbeitungszone von Puls zu Puls. Dadurch entsteht im Einstechloch eine Wärmeakkumulation (Puls-zu-Puls-Mechanismus), welche dazu führt, dass ein bestimmter Materialbereich quer zur Einstechrichtung aufgeschmolzen wird und den Einstichgrund 5 immer wieder mit Material auffüllt. Die zuvor erreichte Einstechtiefe s verringert sich und als Folge stellt sich eine Grenz-Einstechtiefe $s_{grenz}$ ein (vgl. Fig. 4B und Fig. 3B rechts). Ein sicherer Durchstich ist nicht möglich (Einstechstopp in Einstechrichtung).

Um einen Einstechstopp zu vermeiden und gleichzeitig die Durchstichzeit zu verkürzen, wird erfindungsgemäß die während des Einstechens auf das Werkstück eingestrahlte mittlere Pulsleistung gesenkt. Hierdurch kann die Einstechrate entlang der Einstechtiefe maximiert und gleichzeitig ein Durchstich sichergestellt werden. Im Folgenden werden mehrere Ausführungsformen des Verfahrens zum Einstechen gemäß der vorliegenden Offenbarung beschrieben.

Im Folgenden wird gemäß Ausführungsformen ein Verfahren zum Einstechen in ein Werkstück angegeben, sowie eine Vorrichtung zur Lasermaterialbearbeitung mit einer Steuervorrichtung eingerichtet, dieses Verfahren durchzuführen. Gemäß Ausführungsformen wird die eingestrahlte mittlere Pulsleistung verringert, indem die Pulsfrequenz während des Einstechens gesenkt wird. Die vorliegende Erfindung ist jedoch nicht darauf beschränkt. Alternativ kann die eingestrahlte mittlere Pulsleistung verringert werden, indem beispielsweise die Puls-Auszeit verlängert und/oder die Puls-Anzeit verkürzt und/oder eine relative Einschaltdauer verringert wird.

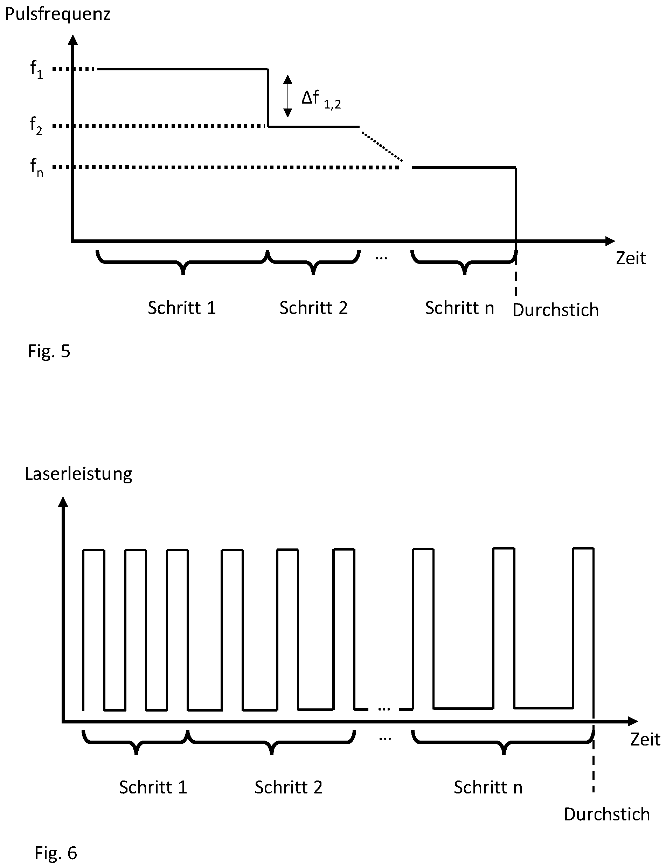

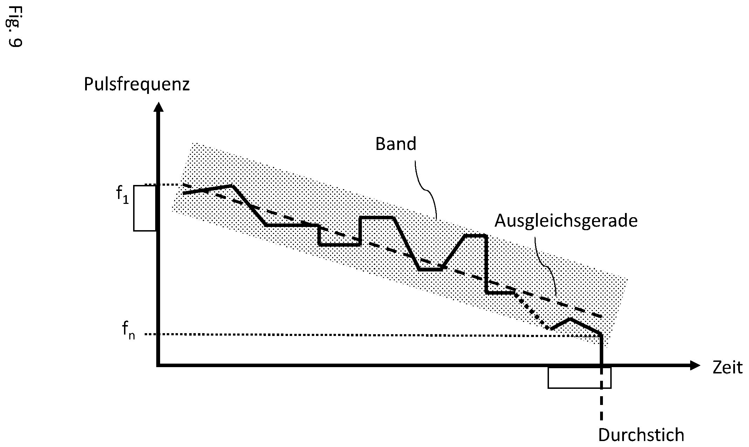

In der in Fig. 5 dargestellten Ausführungsform wird die Pulsfrequenz stufenweise bzw. schrittweise bzw. diskret verringert. Beispielsweise wird die Pulsfrequenz mindestens einmal, vorzugsweise mindestens zweimal, während der Durchstichzeit gesenkt. In diesem Fall kann das Verfahren zum Einstechen zumindest einen ersten Einstechschritt Schritt 1 mit einer ersten Pulsfrequenz $f_1$ und einen zweiten Einstechschritt Schritt 2 mit einer zweiten Pulsfrequenz $f_2$ aufweisen, wobei die erste Pulsfrequenz $f_1$ größer ist als die zweite Pulsfrequenz $f_2$. Der erste Einstechschritt Schritt 1 findet also zu Beginn des Einstechens statt und der zweite Einstechschritt Schritt 2 findet nachfolgend zu dem ersten Einstechschritt Schritt 1 statt. Das Verfahren kann aber auch beliebig viele, z.B. n, Einstechschritte aufweisen, wobei die Pulsfrequenz eines jeden Einstechschritts kleiner ist als die eines vorausgehenden Einstechschritts. Die Pulsfrequenz kann während eines Einstechschritts konstant sein. Alternativ kann, wie unten zu Fig. 9 beschrieben, die Pulsfrequenz während eines Einstechschritts in einem Bereich von 80% und 120%, bevorzugt von 90% und 110%, der mittleren Pulsfrequenz $f_n$ dieses n-ten Einstechschritts betragen (d.h. $f_n \pm 0,2 \cdot f_n$ bzw. $f_n \pm 0,1 \cdot f_n$). Die Änderung der Pulsfrequenz zwischen den Einstechschritten, d.h. $\Delta f_{1,2}$, kann gleich groß oder unterschiedlich sein. Vorzugsweise ist eine erste Änderung, d.h. $\Delta f_{1,2}$, größer als eine zweite Änderung, d.h. $\Delta f_{2,3}$. Ebenso kann eine Dauer der einzelnen Einstechschritte gleich lang sein oder unterschiedlich. Vorzugsweise ist eine Dauer des ersten Einstechschritts am längsten.

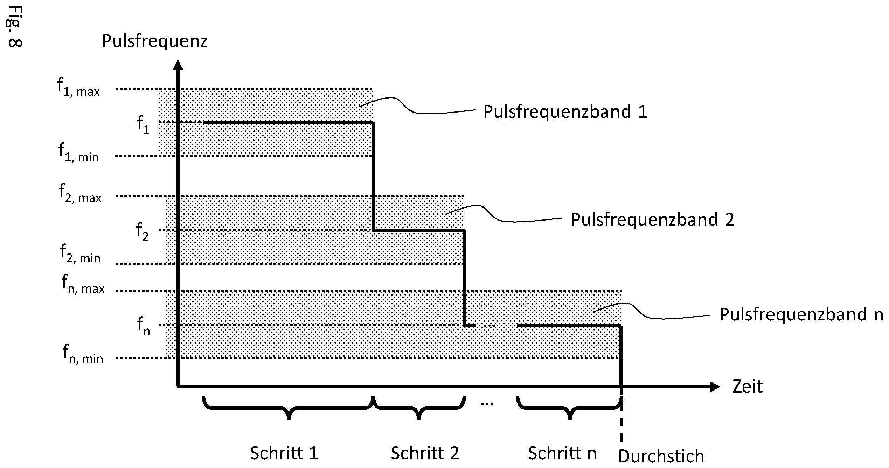

Alternativ zu einer schrittweisen bzw. diskreten Abnahme kann die Pulsfrequenz in einer beliebigen Kombination aus diskreten und kontinuierlichen Absenkungen während der Durchstichzeit verringert werden (vgl. auch Fig. 8).

In Hinblick auf Fig. 5 ist zumindest eine Änderung bzw. Senkung der Pulsfrequenz ($f_2 < f_1$) beschrieben. Die Pulsfrequenz zu Beginn des Einstechens bzw. zu Beginn der Durchstichzeit $f_1$ und/oder die Pulsfrequenzen $f_2$ bis $f_n$ der darauffolgenden Einstechschritte können abhängig von der Dicke des Werkstücks und/oder von der momentanen Einstechzeit und/oder der momentanen Einstechtiefe eingestellt werden.

Bei einer Ausführungsform kann das Einstechen mit variabler Pulsfrequenz mit zwei Änderungen der Pulsfrequenz erfolgen. Vorzugsweise ist die Pulsfrequenz zu Beginn des Einstechens und/oder im ersten Einstechschritt größer oder gleich der Grenz-Pulsfrequenz für dieses Werkstück, die abhängig von der Werkstückdicke und dem Werkstückmaterial sein kann.

Eine weitere Ausführungsform ist in Fig. 6 schematisch dargestellt. Ebenso wie in Fig. 5 wird die Pulsfrequenz in n Einstechschritten bis zum Durchstich verringert. Darüber hinaus bleibt in der in Fig. 6 gezeigten Ausführungsform die Puls-Anzeit $t_{an}$ während des gesamten Einstechprozesses konstant bzw. quasi-konstant. Im letzteren Fall kann die Puls-Anzeit um $\pm 20\%$ oder $\pm 10\%$ der mittleren Puls-Anzeit während der Durchstichzeit abweichen. Mit anderen Worten kann eine quasi-konstante Puls-Anzeit innerhalb eines Bands von $0,8 \cdot t_{an}$ bis $1,2 \cdot t_{an}$ oder von $0,9 \cdot t_{an}$ bis $1,1 \cdot t_{an}$ liegen.

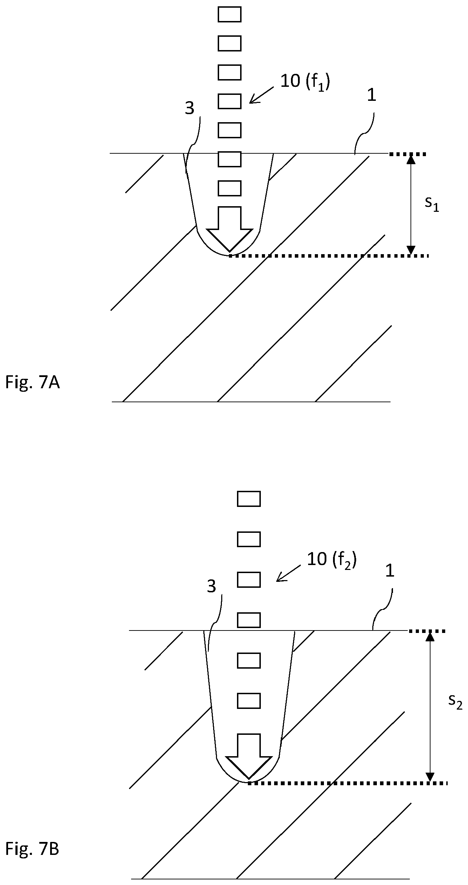

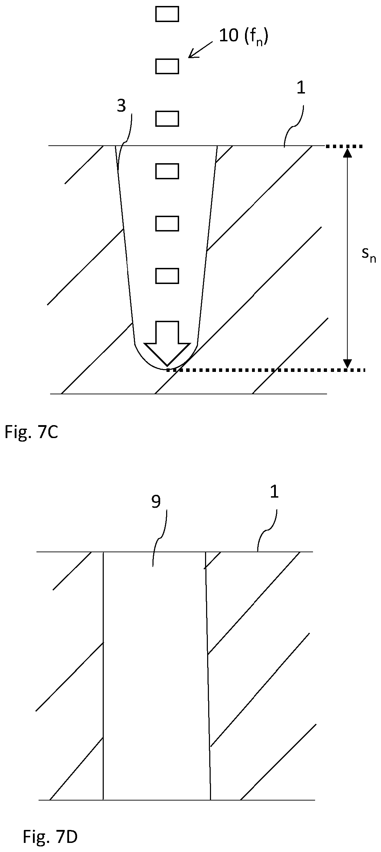

Vorzugsweise wird der Wert für die Puls-Anzeit $t_{an}$ abhängig von der Werkstückdicke gewählt. Die mittlere Pulsleistung bzw. die Pulsfrequenz wird in diesem Fall durch die Erhöhung der Puls-Auszeit $t_{aus}$, beispielsweise in Abhängigkeit der Einstechzeit (Fig. 6) oder in Abhängigkeit der Einstechtiefe (Fig. 7), gesenkt. Dadurch kann gewährleistet werden, dass die Schmelze mit zunehmender Einstechtiefe ausreichend Zeit zwischen den Pulsen hat, um beispielsweise durch eingeblasenes Prozessgas aus dem Einstechloch ausgetrieben zu werden.

Bei der in der in Fig. 6 gezeigten Ausführungsform kann anstelle einer konstanten Puls-Anzeit die eingestrahlte Pulsenergie $E_{Puls}$, d.h. das Produkt aus Pulsspitzenleistung und Puls-Anzeit, konstant gehalten werden, die anderen Pulsparameter können gleich wie in der in Fig. 6 gezeigten Ausführungsform gewählt werden. Optional kann die Pulsenergie auf einen material- und dickenabhängigen Mindest-Wert gesetzt werden.

In einer weiteren in Fig. 7 veranschaulichten Ausführungsform beträgt die Werkstückdicke mindestens 20 mm und die Pulsspitzenleistung mindestens 4 kW. Das Verfahren zum Einstechen weist zumindest drei Einstechschritte mit verschiedenen Pulsfrequenzen auf. Dabei wird der Einstechprozess mit einer ersten Pulsfrequenz größer oder gleich einer von der Werkstückdicke abhängigen Grenz-Pulsfrequenz gestartet (Fig. 7A: $f_{grenz} \leq f_1$). Dies kann Schritt 1 von Fig. 5 entsprechen. Nach einer vorgegebenen Einstechzeit und/oder Einstechtiefe wird die Pulsfrequenz auf eine zweite Pulsfrequenz $f_2$ gesenkt, die kleiner als die erste Pulsfrequenz oder als die Grenz-Pulsfrequenz ist (Fig. 7B: $f_2 < f_1$ oder $f_2 < f_{grenz} \leq f_1$). Dies kann Schritt 2 von Fig. 5 entsprechen. Nach einer weiteren vorgegebenen Einstechzeit und/oder Einstechtiefe wird die Pulsfrequenz auf eine dritte Pulsfrequenz $f_3$, die kleiner als die zweite Pulsfrequenz ist, gesenkt (Fig. 7C: $f_3 < f_2$) und bis zum Durchstich 9 gehalten (vgl. 7D). Im Beispiel des Einstechens in ein 30 mm dickes Werkstück aus Edelstahl bei einer Pulsspitzenleistung von 6 kW aus Fig. 3 konnte mit diesem Verfahren die Durchstichzeit um mehr als 50% reduziert werden, nämlich von 1,7 s bei konstanter Pulsfrequenz von 500 Hz auf 0,8 s. Hierbei wurde die Pulsfrequenz während des Einstechens zweimal geändert: von einer ersten Pulsfrequenz zu Beginn des Einstechens von $f_1 = 588$ Hz auf eine zweite Pulsfrequenz von $f_2 = 400$ Hz und anschließend auf eine dritte Pulsfrequenz von $f_3 = 350$ Hz. Die erste Pulsfrequenz $f_1$ von 588 Hz war hierbei größer als die Grenz-Pulsfrequenz (vgl. Fig. 3A). Dies resultierte in einem optimierten Einstechprozess in Bezug auf eine kurze Durchstichzeit und einen sicheren Durchstich.

Wie oben erwähnt muss die mittlere Pulsleistung bzw. die Pulsfrequenz nicht monoton oder streng monoton abgesenkt werden. Stattdessen kann die mittlere Pulsleistung bzw. die Pulsfrequenz schritt- bzw. stufenweise gesenkt werden, wobei sich die mittlere Pulsleistung bzw. die Pulsfrequenz in jedem Schritt innerhalb eines Leistungsbands bzw.

Pulsfrequenzbands bewegen kann. Das heißt, während jedes Schritts liegt die mittlere Pulsleistung bzw. die Pulsfrequenz innerhalb eines Bands mit einem vorgegebenen Mindestwert und einem vorgegebenen Maximalwert. Das Leistungsband kann definiert sein durch eine Abweichung von $\pm 20\%$, insbesondere von $\pm 10\%$ der durchschnittlichen mittleren Pulsleistung während des Einstechschritts Schritt n. Analog kann das Pulsfrequenzband definiert sein durch eine Abweichung von $\pm 20\%$, insbesondere von $\pm 10\%$ der mittleren Pulsfrequenz $f_n$ während des Einstechschritts Schritt n. In Fig. 8 sind exemplarisch Pulsfrequenzbänder dargestellt, in denen sich die Pulsfrequenz während der einzelnen Schritte 1, ... n bewegen kann. Die Pulsfrequenzbänder verschieben sich mit jedem Schritt zu kleineren Werten. Beispielsweise können sich die Pulsfrequenzbänder schritt- bzw. stufenweise verringern. In Fig. 8 sind die Pulsfrequenzbänder wie folgt definiert: $f_{1,min} = 0{,}8 * f_1$ (oder $0{,}9 * f_1$); $f_{1,max} = 1{,}2 * f_1$ (oder $1{,}1 * f_1$); $f_{2,min} = 0{,}8 * f_2$ (oder $0{,}9 * f_2$); $f_{2,max} = 1{,}2 * f_2$ (oder $1{,}1 * f_2$); $f_{n,min} = 0{,}8 * f_n$ (oder $0{,}9 * f_n$); und $f_{n,max} = 1{,}2 * f_n$ (oder $1{,}1 * f_n$). Mit anderen Worten können geringfügige Erhöhungen der Pulsfrequenz vernachlässigt werden, solange die Pulsfrequenz im zeitlichen Mittel bis zum Durchstich abgesenkt wird. Sollte die mittlere Pulsleistung durch Verändern eines anderen Pulsparameters verringert werden, beispielsweise durch Verlängern der Puls-Auszeit, kann diese Veränderung ebenfalls schrittweise erfolgen, wobei dieser Pulsparameter in jeden Schritt in einem Band von $\pm 20\%$, insbesondere von $\pm 10\%$ des Mittelwerts dieses Pulsparameters in diesem Schritt liegen kann.

Ebenso kann die mittlere Pulsleistung bzw. die Pulsfrequenz kontinuierlich bzw. quasi-kontinuierlich gesenkt werden. Hierfür kann es genügen, dass sich die mittlere Pulsleistung bzw. die Pulsfrequenz in einem Band bewegen, welches im zeitlichen Mittel abnimmt (vgl. Fig. 9). Das heißt, die mittlere Pulsleistung bzw. die Pulsfrequenz nehmen zeitlich gemittelt ab. Mit anderen Worten kann die mittlere Pulsleistung bzw. die Pulsfrequenz als abgesenkt betrachtet werden, wenn eine entsprechende Ausgleichs- bzw. Regressionsgerade (gestrichelt in Fig. 9) während der Durchstichzeit, d.h. vom Beginn des Einstechens bis zum Durchstich, eine negative Steigung aufweist. Denn eine zeitlich sehr kurze Anhebung der mittleren Pulsleistung bzw. der Pulsfrequenz kann für das Verfahren zum Einstechen gemäß dieser Offenbarung vernachlässigbar sein. Sollte die mittlere Pulsleistung durch Verändern eines anderen Pulsparameters verringert werden, beispielsweise durch Verlängern der Puls-Auszeit, kann diese Veränderung ebenfalls kontinuierlich bzw. quasi-kontinuierlich erfolgen, solange eine Ausgleichs- bzw. Regressionsgerade dieses Pulsparameters während der Durchstichzeit eine negative Steigung aufweist.

Gemäß den Ausführungsformen dieser Offenbarung ist ein Verfahren und eine Vorrichtung zum Einstechen in ein Werkstück mittels eines Laserstrahls angegeben, wodurch eine Einstechdauer minimiert bzw. eine Einstechrate maximiert werden und gleichzeitig ein sicherer Durchstich gewährleistet und ein Einstechstopp verhindert werden kann.

**Patentansprüche**

1.    Verfahren zum Einstechen in ein metallisches Werkstück mit einer Dicke von mindestens 10 mm mittels eines Laserstrahls, umfassend:

Einstrahlen eines gepulsten Laserstrahls (10) auf ein metallisches Werkstück (1) mit einer Dicke von mindestens 10 mm zum Ausbilden eines Durchstichs (9),
**dadurch gekennzeichnet, dass**
eine eingestrahlte mittlere Pulsleistung ($P_{mittel}$) des gepulsten Laserstrahls (10) während des Einstechens verringert wird.

2.    Verfahren nach Anspruch 1, wobei die eingestrahlte mittlere Pulsleistung ($P_{mittel}$) diskret und/oder schrittweise und/oder kontinuierlich verringert wird.

3.    Verfahren nach einem der vorausgehenden Ansprüche, wobei eine Ausgleichsgerade der eingestrahlten mittleren Pulsleistung ($P_{mittel}$) während des Einstechens eine negative Steigung aufweist.

4.    Verfahren nach einem der vorausgehenden Ansprüche, wobei die eingestrahlte mittlere Pulsleistung ($P_{mittel}$) und/oder eine Pulsfrequenz (f) schrittweise verringert wird und während jedes Schritts innerhalb eines Bands mit einem vorgegebenen Mindestwert und einem vorgegebenen Maximalwert liegt.

5.    Verfahren nach einem der vorausgehenden Ansprüche, wobei die eingestrahlte mittlere Pulsleistung ($P_{mittel}$) durch mindestens eine der folgenden Änderungen von Pulsparametern des gepulsten Laserstrahls (10) verringert wird: Verlängern einer Puls-Auszeit ($t_{aus}$), Verkürzen einer Puls-Anzeit ($t_{an}$), Verringern einer Pulsfrequenz (f) und Verringern einer relativen Puls-Einschaltdauer.

6.    Verfahren nach einem der vorausgehenden Ansprüche, wobei die eingestrahlte mittlere Pulsleistung ($P_{mittel}$) durch

Verlängern der Puls-Auszeit ($t_{aus}$) verringert wird und die Pulsspitzenleistung ($P_{Peak}$) und/oder die Puls-Anzeit ($t_{an}$) und/oder eine Pulsenergie ($E_{Puls}$) während des Einstechens konstant gehalten werden.

7. Verfahren nach einem der vorausgehenden Ansprüche, wobei eine erste Pulsfrequenz ($f_1$) in einem ersten Einstechschritt zu Beginn des Einstechens größer oder gleich ist als eine vorgegebene Grenz-Pulsfrequenz.

8. Verfahren nach einem der vorausgehenden Ansprüche, wobei die eingestrahlte mittlere Pulsleistung ($P_{mittel}$) in mindestens zwei Schritten verringert wird, wobei eine erste Pulsfrequenz ($f_1$) in einem ersten Einstechschritt größer oder gleich ist als eine vorgegebene Grenz-Pulsfrequenz und eine zweite Pulsfrequenz ($f_2$) in einem zweiten Einstechschritt kleiner ist als die erste Pulsfrequenz ($f_1$) oder als die Grenz-Pulsfrequenz.

9. Verfahren nach Anspruch 7 oder 8, wobei die vorgegebene Grenz-Pulsfrequenz abhängig von einer Dicke und/oder einem Material des Werkstücks (1) ist, und/oder wobei die vorgegebene Grenz-Pulsfrequenz eine Pulsfrequenz angibt, ab der ein Einstechstopp auftritt.

10. Verfahren nach einem der vorausgehenden Ansprüche, wobei mindestens einer der Pulsparameter des gepulsten Laserstrahls (10), ausgewählt aus der Gruppe umfassend die eingestrahlte mittlere Pulsleistung, die Puls-Auszeit, die Puls-Anzeit, die Pulsfrequenz, die relative Puls-Einschaltdauer und die Pulsspitzenleistung, abhängig von einem Material und/oder einer Dicke des Werkstücks und/oder von einer momentanen Einstechzeit und/oder von einer momentanen Einstechtiefe eingestellt wird.

11. Verfahren nach einem der vorausgehenden Ansprüche, wobei eine Puls-Auszeit ($t_{aus}$) und/oder eine Puls-Anzeit ($t_{an}$) des gepulsten Laserstrahls (10) in einem Bereich zwischen 0,01 ms und 100 ms oder zwischen 0,1 ms und 10 ms liegt; und/oder

   wobei eine Pulsfrequenz des gepulsten Laserstrahls (10) in einem Bereich zwischen 200 Hz und 3000 Hz oder zwischen 400 Hz und 2000 Hz liegt; und/oder
   wobei beim Einstechen in ein Werkstück (1) mit einer Dicke von mehr als 20 mm die eingestrahlte mittlere Pulsleistung ($P_{mittel}$) in mindestens zwei Schritten geändert wird.

12. Verfahren nach einem der vorausgehenden Ansprüche, wobei die eingestrahlte mittlere Pulsleistung ($P_{mittel}$) in Abhängigkeit von mindestens einem der folgenden Parameter gesteuert wird: Dicke des Werkstücks, Material des Werkstücks, aktuelle Einstechzeit, aktuelle Einstechtiefe, Prozessgasart, Prozessgasdruck, Abbildungsverhältnis eines optischen Systems eines Laserbearbeitungskopfs (100), Fokuslage, Fokusdurchmesser, Intensitätsverteilung des Laserstrahls (10), Düsenart, Düsendurchmesser und Düsenabstand zum Werkstück.

13. Verfahren nach einem der vorausgehenden Ansprüche, wobei das Einstechen in ein metallisches Blech erfolgt.

14. Verfahren zum Laserschneiden, umfassend:

   ein Verfahren zum Einstechen gemäß einem der vorausgehenden Ansprüche; und
   Schneiden mittels des Laserstrahls (10) ausgehend vom ausgebildeten Durchstich (9).

15. Vorrichtung zur Lasermaterialbearbeitung eines metallischen Werkstücks (1) mit einer Dicke von mindestens 10 mm, umfassend:

   eine Laserquelle (200) zum Erzeugen eines Laserstrahls (10);
   einen Laserbearbeitungskopf (100) zum Einstrahlen des Laserstrahls (10) auf das Werkstück; und **gekennzeichnet durch**
   eine Steuervorrichtung (300) konfiguriert zum Steuern der Vorrichtung, um ein Verfahren zum Einstechen und zum Laserschneiden mit den folgenden Schritten durchzuführen:

      Einstrahlen des gepulsten Laserstrahls (10) auf ein metallisches Werkstück (1) zum Ausbilden eines Durchstichs (9), wobei eine eingestrahlte mittlere Pulsleistung ($P_{mittel}$) des gepulsten Laserstrahls (10) während des Einstechens verringert wird, und
      Schneiden mittels des Laserstrahls (10) ausgehend vom ausgebildeten Durchstich (9).

**Claims**

1. A method for piercing a metallic workpiece with a thickness of at least 10 mm by means of a laser beam, comprising:

   irradiating a pulsed laser beam (10) onto a metallic workpiece (1) with a thickness of at least 10 mm to form a piercing breakthrough (9),
   **characterized in that**
   a irradiated mean pulse power ($P_{mittel}$) of the pulsed laser beam (10) is reduced during piercing.

2. The method according to claim 1, wherein the irradiated mean pulse power ($P_{mittel}$) is reduced discretely and/or in steps and/or continuously.

3. The method according to one of the preceding claims, wherein a line of best fit of the irradiated mean pulse power ($P_{mittel}$) has a negative slope during piercing.

4. The method according to one of the preceding claims, wherein the irradiated mean pulse power ($P_{mittel}$) and/or a pulse frequency (f) is reduced in steps and, during each step, lies within a band with a predetermined minimum value and a predetermined maximum value.

5. The method according to one of the preceding claims, wherein the irradiated mean pulse power ($P_{mittel}$) is reduced by at least one of the following changes in pulse parameters of the pulsed laser beam (10): lengthening a pulse off-time ($t_{aus}$), shortening a pulse on-time ($t_{an}$), reducing a pulse frequency (f), and reducing a relative pulse duty cycle.

6. The method according to one of the preceding claims, wherein the irradiated mean pulse power ($P_{mittel}$) is reduced by lengthening the pulse off-time ($t_{aus}$) and keeping the pulse peak power ($P_{Peak}$) and/or the pulse on-time ($t_{an}$) and/or a pulse energy ($E_{Puls}$) constant during piercing.

7. The method according to one of the preceding claims, wherein a first pulse frequency ($f_1$) in a first piercing step at the start of piercing is greater than or equal to a predetermined limit pulse frequency.

8. The method according to one of the preceding claims, wherein the irradiated mean pulse power ($P_{mittel}$) is reduced in at least two steps, wherein a first pulse frequency ($f_1$) in a first piercing step is greater than or equal to a predetermined limit pulse frequency and a second pulse frequency ($f_2$) in a second piercing step is less than the first pulse frequency ($f_1$) or than the limit pulse frequency.

9. The method according to claim 7 or 8, wherein the predetermined limit pulse frequency is based on a thickness and/or a material of the workpiece (1), and/or wherein the predetermined limit pulse frequency specifies a pulse frequency from which on a piercing stop occurs.

10. The method according to one of the preceding claims, wherein at least one of the pulse parameters of the pulsed laser beam (10), selected from the group comprising the mean pulse power irradiated, the pulse off-time, the pulse on-time, the pulse frequency, the relative pulse duty cycle and the pulse peak power, is adjusted based on a material and/or a thickness of the workpiece and/or on a current piercing time and/or on a current piercing depth.

11. The method according to one of the preceding claims, wherein a pulse off-time ($t_{aus}$) and/or a pulse on-time ($t_{an}$) of the pulsed laser beam (10) is in a range of between 0.01 ms and 100 ms or between 0.1 ms and 10 ms; and/or

    wherein a pulse frequency of the pulsed laser beam (10) is in a range of between 200 Hz and 3000 Hz or between 400 Hz and 2000 Hz; and/or
    wherein, when piercing a workpiece (1) with a thickness of more than 20 mm, the irradiated mean pulse power ($P_{mittel}$) is changed in at least two steps.

12. The method according to one of the preceding claims, wherein the irradiated mean pulse power ($P_{mittel}$) is controlled as a function of at least one of the following parameters: thickness of the workpiece, material of the workpiece, current piercing time, current piercing depth, type of process gas, process gas pressure, imaging ratio of an optical system of a laser machining head (100), focal position, focal diameter, intensity distribution of the laser beam (10), nozzle type, nozzle diameter, and nozzle distance from the workpiece.

**13.** The method according to one of the preceding claims, wherein a metallic sheet is pierced.

**14.** A method of laser cutting, comprising:

> a method for piercing according to one of the preceding claims; and
> cutting by means of the laser beam (10) starting from the formed piercing breakthrough (9).

**15.** A device for laser material machining of a metallic workpiece (1) with a thickness of at least 10 mm, comprising:

> a laser source (200) for generating a laser beam (10);
> a laser machining head (100) for irradiating the laser beam (10) onto said workpiece; and **characterized by**
> a control device (300) configured to control said device to perform a method for piercing and for laser cutting with the following steps:

>> irradiating the pulsed laser beam (10) onto a metallic workpiece (1) to form a piercing breakthrough (9), wherein an irradiated mean pulse power ($P_{mittel}$) of the pulsed laser beam (10) is reduced during piercing, and cutting by means of the laser beam (10) starting from the formed piercing breakthrough (9).

**Revendications**

**1.** Procédé pour percer dans une pièce métallique ayant une épaisseur d'au moins 10 mm au moyen d'un faisceau laser, comprenant les étapes consistant à :

> projeter un faisceau laser pulsé (10) sur une pièce métallique (1) ayant une épaisseur d'au moins 10 mm pour réaliser un perçage (9),
> **caractérisé en ce qu'**une puissance d'impulsion moyenne projetée ($P_{mittel}$) du faisceau laser pulsé (10) est réduite pendant le perçage.

**2.** Procédé selon la revendication 1, dans lequel la puissance d'impulsion moyenne projetée ($P_{mittel}$) est réduite de manière discrète et/ou progressive et/ou continue.

**3.** Procédé selon l'une des revendications précédentes, dans lequel une droite de meilleur ajustement de la puissance d'impulsion moyenne projetée ($P_{mittel}$) ) pendant le perçage a une pente négative.

**4.** Procédé selon l'une des revendications précédentes, dans lequel la puissance d'impulsion moyenne projetée ($P_{mittel}$) et/ou une fréquence d'impulsion (f) est réduite progressivement et se situe pendant chaque étape dans les limites d'une bande avec une valeur minimale prédéterminée et une valeur maximale prédéterminée.

**5.** Procédé selon l'une des revendications précédentes, dans lequel la puissance d'impulsion moyenne projetée ($P_{mittel}$) est réduite par au moins une des modifications suivantes de paramètres d'impulsion du faisceau laser pulsé (10) : allonger un temps de blocage d'impulsion ($t_{aus}$), raccourcir un temps de passage d'impulsion ($t_{an}$), réduire une fréquence d'impulsion (f) et réduire un cycle de service.

**6.** Procédé selon l'une des revendications précédentes, dans lequel la puissance d'impulsion moyenne projetée ($P_{mittel}$) est réduite en allongeant le temps de blocage d'impulsion ($t_{aus}$) et la puissance de crête d'impulsion ($P_{Peak}$) et/ou le temps de passage d'impulsion ($t_{an}$) et/ou une énergie d'impulsion ($E_{Puls}$) sont maintenus constants pendant le perçage.

**7.** Procédé selon l'une des revendications précédentes, dans lequel une première fréquence d'impulsion ($f_1$) à une première étape de perçage au début du perçage est supérieure ou égale à une fréquence d'impulsion limite prédéterminée.

**8.** Procédé selon l'une des revendications précédentes, dans lequel la puissance d'impulsion moyenne projetée ($P_{mittel}$) est réduite en au moins deux étapes, dans lequel une première fréquence d'impulsion ($f_1$) à une première étape de perçage est supérieure ou égale à une fréquence d'impulsion limite prédéterminée, et une seconde fréquence d'impulsion ($f_2$ ) à une seconde étape de perçage est inférieure à la première fréquence d'impulsion ($f_1$) ou à la fréquence d'impulsion limite.

9. Procédé selon la revendication 7 ou 8, dans lequel la fréquence d'impulsion limite prédéterminée dépend d'une épaisseur et/ou d'un matériau de la pièce (1) et/ou dans lequel la fréquence d'impulsion limite prédéterminée indique une fréquence d'impulsion à partir de laquelle un arrêt de perçage se produit.

10. Procédé selon l'une des revendications précédentes, dans lequel au moins un des paramètres d'impulsion du faisceau laser pulsé (10), choisi parmi le groupe comprenant la puissance d'impulsion moyenne projetée, le temps de blocage d'impulsion, le temps de passage d'impulsion, la fréquence d'impulsion, le cycle de service et la puissance de crête d'impulsion, est réglé en fonction d'un matériau et/ou d'une épaisseur de la pièce et/ou d'un temps de perçage instantané et/ou d'une profondeur de perçage instantanée.

11. Procédé selon l'une des revendications précédentes, dans lequel un temps de blocage d'impulsion ($t_{aus}$) et/ou un temps de passage d'impulsion ($t_{an}$) du faisceau laser pulsé (10) est dans une plage comprise entre 0,01 ms et 100 ms ou entre 0,1 ms et 10 ms ; et/ou

    dans lequel une fréquence d'impulsion du faisceau laser pulsé (10) est dans une plage comprise entre 200 Hz et 3 000 Hz ou entre 400 Hz et 2 000 Hz ; et/ou
    dans lequel lors du perçage dans une pièce (1) ayant une épaisseur de plus de 20 mm, la puissance d'impulsion moyenne projetée ($P_{mittel}$) est changée en au moins deux étapes.

12. Procédé selon l'une des revendications précédentes, dans lequel la puissance d'impulsion moyenne projetée ($P_{mittel}$) est commandée en fonction d'au moins un des paramètres suivants : épaisseur de la pièce, matériau de la pièce, temps de perçage actuel, profondeur de perçage actuelle, type de gaz de procédé, pression de gaz de procédé, taux d'imagerie d'un système optique d'une tête d'usinage au laser (100), position focale, diamètre focal, répartition d'intensité du faisceau laser (10), type de buse, diamètre de buse et distance entre la buse et la pièce.

13. Procédé selon l'une des revendications précédentes, dans lequel le perçage est réalisé dans une tôle métallique.

14. Procédé de découpage au laser, comprenant :

    un procédé de perçage selon l'une des revendications précédentes ; et
    un découpage au moyen du faisceau laser (10) en commençant par le perçage (9) réalisé.

15. Dispositif d'usinage de matière au laser d'une pièce métallique (1) ayant une épaisseur d'au moins 10 mm, comprenant :

    une source laser (200) pour générer un faisceau laser (10) ;
    une tête d'usinage au laser (100) pour projeter le faisceau laser (10) sur la pièce ; et **caractérisé par**
    un dispositif de commande (300) configuré pour commander au dispositif de mettre en œuvre un procédé de perçage et de découpage au laser comportant les étapes suivantes consistant à :

    projeter le faisceau laser pulsé (10) sur une pièce métallique (1) pour réaliser un perçage (9), dans lequel une puissance d'impulsion moyenne projetée ($P_{mittel}$) du faisceau laser pulsé (10) est réduite pendant le perçage, et
    découper au moyen du faisceau laser (10) en commençant par le perçage (9) réalisé.

Fig. 1

Fig. 2

Fig. 3A

350 Hz        400 Hz        500 Hz        588 Hz

3,6 s        2,5 s        1,7 s        Einstechstopp

Fig. 3B

Fig. 4A

Fig. 4B

Pulsfrequenz

$f_1$

$\Delta f_{1,2}$

$f_2$

$f_n$

Zeit

Schritt 1    Schritt 2    ...    Schritt n    Durchstich

Fig. 5

Laserleistung

Zeit

Schritt 1    Schritt 2    ...    Schritt n

Durchstich

Fig. 6

Fig. 7A

Fig. 7B

10 (f_n)

3

1

$s_n$

Fig. 7C

9

1

Fig. 7D

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5434383 A
- DE 112009001200 B4
- US 6693256 B2
- WO 2016143521 A1
- US 20020185474 A1
- US 8816246 B2